# EUROPEAN PATENT APPLICATION

(11) **EP 4 835 184 A1**
(43) Date of publication of application: **04.11.2026**
(21) Application number: 26175625.8
(22) Date of filing: 30.04.2026
(51) Int. Cl.: D05B 19/04

(54) **SEWING MACHINE MANAGEMENT SYSTEM AND SEWING MACHINE MANAGEMENT METHOD**

(30) Priority: 01.05.2025 JP 2025076042
(71) Applicant: JUKI Corporation, Tama-shi, Tokyo 206-8551 (JP)
(72) Inventor: ATSUMI, Tadashi, Tokyo, 206-8551 (JP)
(74) Representative: Hoeger, Stellrecht & Partner Patentanwälte mbB

(57) **Abstract**

A sewing machine management system (1) includes a history data acquisition unit (16) configured to acquire history data indicating a history of a sewing machine (2), and an output unit (18) configured to cause an output device to output, based on the history data, recommendation data for recommending replacement of the sewing machine (2). According to the sewing machine management system (1), the sewing machine (2) is replaced at an appropriate timing.

## Description

### TECHNICAL FIELD

The technique disclosed in the present description relates to a sewing machine management system and a sewing machine management method.

### BACKGROUND ART

In the technical field related to sewing machine management systems, a sewing machine management system as disclosed in JP2024-122645A is known. The sewing machine management system disclosed in JP2024-122645A manages industrial sewing machines operating in a sewing factory.

### SUMMARY OF INVENTION

In a case where a sewing machine is replaced after the sewing machine reaches an end of a service life, there will be a period in which the sewing machine cannot be used, and thus there is a possibility that productivity of the sewing factory decreases. Therefore, in the sewing factory, the sewing machine is replaced before the sewing machine reaches the end of the service life.

In the related art, when a sewing machine is replaced in a sewing factory, an administrator of the sewing factory determines a replacement time of the sewing machine based on a manufacturing date of the sewing machine. When the administrator determines the replacement time of the sewing machine, there is a possibility that it is determined that the sewing machine needs to be replaced even though there is still a margin before an end of a service life, or it is determined that the sewing machine does not need to be replaced even though there is no margin before the end of the service life.

An object of the technique disclosed in the present description is to replace a sewing machine at an appropriate timing.

The present description discloses a sewing machine management system. The sewing machine management system includes a history data acquisition unit configured to acquire history data indicating a history of a sewing machine, and an output unit configured to cause an output device to output, based on the history data, recommendation data for recommending replacement of the sewing machine.

According to the technique disclosed in the present description, the sewing machine is replaced at an appropriate timing.

### BRIEF DESCRIPTION OF DRAWINGS

Fig. 1 is a diagram schematically showing a sewing machine management system according to an embodiment;
Fig. 2 is a block diagram showing a sewing machine and a management device according to the embodiment;
Fig. 3 is a diagram illustrating table data according to the embodiment;
Fig. 4 is a diagram illustrating a relationship between a total value and a threshold according to the embodiment; and
Fig. 5 is a flowchart showing a sewing machine management method according to the embodiment.

### DESCRIPTION OF EMBODIMENTS

Hereinafter, an embodiment according to the present technique will be described with reference to the drawings, but the present technique is not limited to the embodiment. The components of the embodiment described below can be appropriately combined. A part of the components may not be used.

### [Sewing Machine Management System]

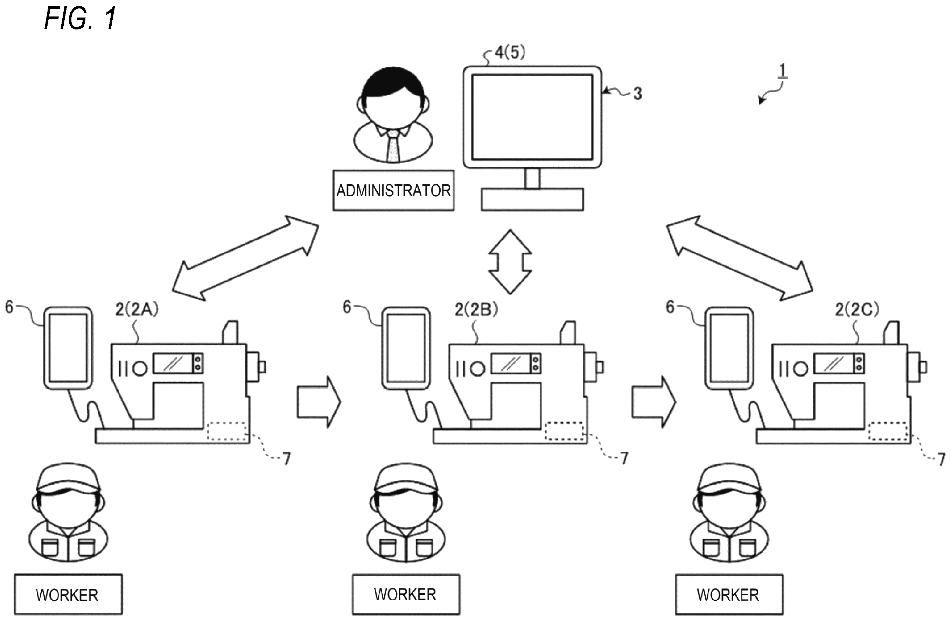

Fig. 1 is a diagram schematically showing a sewing machine management system 1 according to an embodiment. The sewing machine management system 1 manages sewing machines 2 installed in a sewing factory. The sewing machines 2 operate in the sewing factory. Each of the sewing machines 2 is an industrial sewing machine. A sewing target is sewn by the sewing machines 2 to produce a sewn product.

The sewing machine management system 1 includes a management device 3 that manages the sewing machines 2. In the embodiment, the management device 3 is installed in the sewing factory. The management device 3 may be installed outside the sewing factory.

The management device 3 manages a production process of the sewn product. The production process includes sewing steps of sewing the sewing target using the sewing machines 2. In the sewing steps, the sewing target is sewn by the sewing machines 2 to produce the sewn product. Examples of the sewing target include fabric. Examples of the sewn product include clothes.

In the sewing factory, a plurality of types of sewing machines 2 corresponding to applications are installed. In the sewing factory, a plurality of types of sewing machines 2 are installed to correspond to a plurality of sewing steps for producing the sewn product. Examples of the types of the sewing machines 2 include a lockstitch sewing machine for sewing a body part, a button sewing machine for attaching a button to the body part, and a pocket sewing machine for attaching a pocket to the body part. In one sewing factory, many sewing machines 2 of various types are installed. In order to simplify the description, three sewing machines 2 are shown in Fig. 1. A first sewing machine 2A is used in a first step for producing the sewn product. A second sewing machine 2B is used in a second step for producing the sewn product. A third sewing machine 2C is used in a third step for producing the sewn product. In the sewing factory, a plurality of sewing machines 2 of one type may be installed.

In the sewing factory, an administrator and workers work. The administrator manages the workers and the sewing machines 2. The workers sew the sewing target using the sewing machines 2 in the sewing steps. Each of the administrator and the workers may be regarded as a user of the sewing machine 2. The number of administrators may be one or may be multiple. The number of workers may be multiple or may be one. For example, one worker may operate a plurality of sewing machines 2.

The management device 3 includes a display device 4 and an input device 5. The display device 4 displays display data. The display device 4 includes a flat panel display, such as a liquid crystal display or an organic EL display. The input device 5 is operated by the administrator to generate input data. The input device 5 may be operated by the worker. The input device 5 includes a touch panel (touch sensor) disposed on a display screen of the display device 4. The input device 5 may be a computer keyboard, a mouse, or a voice input device.

Each of the sewing machines 2 includes an operation panel 6 and a controller 7. The operation panel 6 is operated by the worker to generate operation data. The operation panel 6 includes a touch panel (touch sensor) disposed on a display screen of a display.

The management device 3 is shared by the plurality of sewing machines 2 in the sewing factory. The number of management devices 3 is less than the number of sewing machines 2. The management device 3 can communicate with each of the sewing machines 2. The management device 3 communicates with the controller 7.

### [Sewing Machine and Management Device]

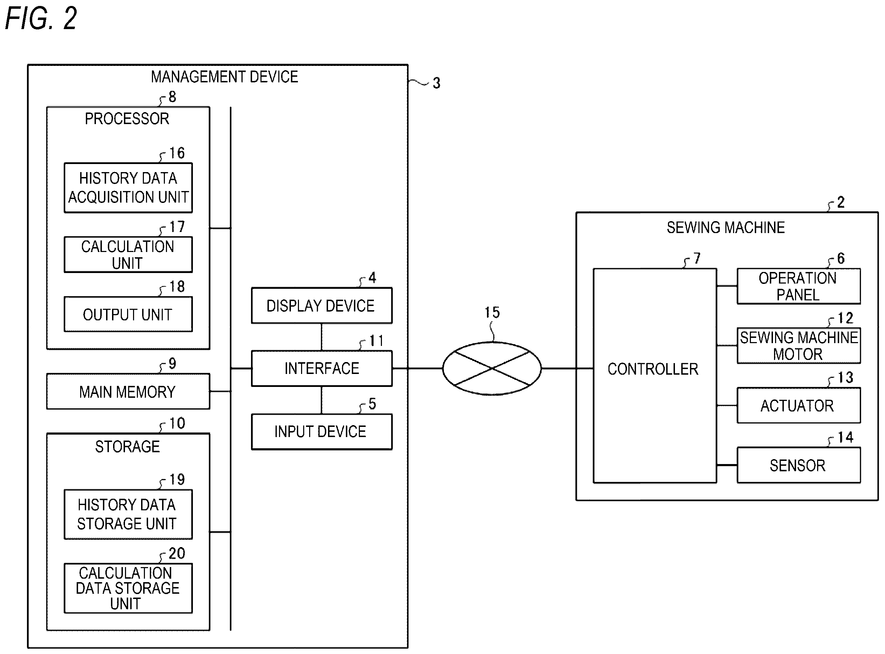

Fig. 2 is a block diagram showing the sewing machine 2 and the management device 3 according to the embodiment. The management device 3 includes a computer. The management device 3 includes a processor 8 such as a central processing unit (CPU), a main memory 9 including a volatile memory such as a random access memory (RAM), a storage 10 including a nonvolatile memory such as a read only memory (ROM), and an interface 11 including an input and output circuit. A function of the processor 8 is stored in the storage 10 as a computer program. The processor 8 reads the computer program from the storage 10, loads the computer program into the main memory 9, and executes processing according to the computer program. The computer program may be distributed to the management device 3 via a network.

The sewing machine 2 includes the controller 7, the operation panel 6, a sewing machine motor 12, an actuator 13, and a sensor 14. The controller 7 controls the sewing machine 2. The controller 7 includes a computer including a processor, a main memory, a storage, and an interface.

The management device 3 and the controller 7 communicate with each other via a network 15. Examples of the network 15 include a local area network (LAN), a wide area network (WAN), an intranet, and the Internet. The management device 3 and the controller 7 may perform wireless communication or wired communication.

The sewing machine motor 12 is a main power source of the sewing machine 2. The sewing machine motor 12 drives a needle bar, a thread take-up lever, and a shuttle of the sewing machine 2 to operate. A sewing machine needle reciprocates in an up-down direction while being held by the needle bar. The actuator 13 is a power source different from the sewing machine motor 12. Examples of the actuator 13 include a lifting actuator that lifts and lowers a presser of the sewing machine 2 that presses the sewing target, and a thread cutting actuator that operates a thread cutting mechanism of the sewing machine 2. The sensor 14 detects an operation condition of the sewing machine 2.

The management device 3 includes a history data acquisition unit 16, a calculation unit 17, and an output unit 18.

The history data acquisition unit 16 acquires history data indicating a history of the sewing machine 2. The history data acquisition unit 16 acquires the history data of each of the plurality of sewing machines 2 (2A, 2B, 2C). The history data acquisition unit 16 acquires the history data from one or both of the controller 7 and the input device 5. The controller 7 can transmit the history data of the sewing machine 2 to the history data acquisition unit 16 via the network 15. The input device 5 can input the history data of the sewing machine 2 to the history data acquisition unit 16 by being operated by the administrator.

The history of the sewing machine 2 refers to various records from a production time of the sewing machine 2 to a current time. The history of the sewing machine 2 includes at least one of an operation history of the sewing machine 2 from the production time of the sewing machine 2 to the current time, a usage environment history of the sewing machine 2 from the production time of the sewing machine 2 to the current time, or a maintenance history of the sewing machine 2 from the production time of the sewing machine 2 to the current time. The history of the sewing machine 2 includes a plurality of items related to the history.

The operation history of the sewing machine 2 includes at least one of an operating time Td of the sewing machine 2, an energization time Te for an electric device of the sewing machine 2, a rotation speed Rs of the sewing machine motor 12, or the number of stitches Ns during sewing by the sewing machine 2. The operating time Td refers to an accumulated value of operating times of the sewing machine 2. The electric device refers to a device that operates when being energized. Examples of the electric device of the sewing machine 2 include the controller 7, the sewing machine motor 12, the actuator 13, the sensor 14, and an electrical cable (not shown). The energization time Te refers to an accumulated value of energization times for the electric device. The number of stitches Ns during sewing by the sewing machine 2 refers to an accumulated value of the number of times the sewing machine needle held by the needle bar and reciprocating in the up-down direction penetrates the sewing target.

The controller 7 can transmit the operating time Td, the energization time Te, the rotation speed Rs, and the number of stitches Ns to the management device 3. The sewing machine 2 includes a sewing machine drive circuit that drives the sewing machine motor 12. The sewing machine drive circuit includes a switch element such as a field effect transistor (FET). At the time of driving the sewing machine motor 12, the controller 7 transmits, to the sewing machine drive circuit, a control command for driving the sewing machine motor 12. The operating time Td of the sewing machine 2 is a time during which the control command is transmitted from the controller 7 to the sewing machine drive circuit. The controller 7 can measure the energization time Te for the electric device of the sewing machine 2. The rotation speed Rs of the sewing machine motor 12 is determined based on the control command transmitted from the controller 7 to the sewing machine drive circuit.

The controller 7 can transmit the operation history of the sewing machine 2 to the management device 3 based on detection data of the sensor 14. When the sensor 14 is a rotation speed sensor that detects the rotation speed Rs of the sewing machine motor 12, the controller 7 can transmit the rotation speed Rs of the sewing machine motor 12 detected by the rotation speed sensor to the management device 3 as the operation history of the sewing machine 2. When the sensor 14 is a stitch number sensor that detects the number of stitches Ns, the controller 7 can transmit the number of stitches Ns detected by the stitch number sensor to the management device 3 as the operation history of the sewing machine 2.

The usage environment history of the sewing machine 2 includes at least one of a usage environment temperature Tp of the sewing machine 2, a usage environment humidity Hp of the sewing machine 2, a use location Up of the sewing machine 2, an operating period (an operation year and month) Da of the sewing machine 2, an owner Ch of the sewing machine 2, the number of times of relocation Nr of the sewing machine 2, or a relocation distance Dr of the sewing machine 2. The usage environment temperature Tp of the sewing machine 2 refers to an atmospheric temperature of an environment in which the sewing machine 2 is used. The usage environment humidity Hp of the sewing machine 2 refers to an atmospheric humidity of an environment in which the sewing machine 2 is used. The use location Up of the sewing machine 2 is a country or a city where the sewing machine 2 is used. The operating period Da of the sewing machine 2 is a period or a season in which the sewing machine 2 operates. The owner Ch means a sewing factory in which the sewing machine 2 is installed. Relocation of the sewing machine 2 refers to transferring the sewing machine 2 installed in a first sewing factory to a second sewing factory. The number of times of relocation Nr of the sewing machine 2 refers to the number of times the sewing machine 2 is relocated. The relocation distance Dr of the sewing machine 2 refers to a movement distance of the sewing machine 2 to be relocated. When the sewing machine 2 is relocated from the first sewing factory to the second sewing factory, the relocation distance Dr is a distance from the first sewing factory to the second sewing factory. When the sewing machine 2 is sequentially relocated to a plurality of sewing factories, the relocation distance Dr of the sewing machine 2 is a sum of relocation distances of the sewing machine 2 when being sequentially relocated to the plurality of sewing factories.

The controller 7 can transmit the usage environment temperature Tp of the sewing machine 2, the usage environment humidity Hp of the sewing machine 2, the use location Up of the sewing machine 2, and the operating period Da of the sewing machine 2 to the management device 3. The controller 7 can transmit the usage environment history of the sewing machine 2 to the management device 3 based on the detection data of the sensor 14. When the sensor 14 is a temperature sensor, the controller 7 can transmit the usage environment temperature Tp of the sewing machine 2 detected by the temperature sensor to the management device 3 as the usage environment history of the sewing machine 2. When the sensor 14 is a humidity sensor, the controller 7 can transmit the usage environment humidity Hp of the sewing machine 2 detected by the humidity sensor to the management device 3 as the usage environment history of the sewing machine 2. When the sensor 14 is a position sensor using a global navigation satellite system (GNSS), the controller 7 can transmit the use location Up of the sewing machine 2 detected by the position sensor to the management device 3 as the usage environment history of the sewing machine 2. The controller 7 has a clock function. The controller 7 can recognize the operating period Da of the sewing machine 2 by the clock function.

By operating the input device 5, the administrator can input the owner Ch of the sewing machine 2, the number of times of relocation Nr of the sewing machine 2, and the relocation distance Dr of the sewing machine 2 to the history data acquisition unit 16 as the usage environment history of the sewing machine 2.

The maintenance history of the sewing machine 2 includes at least one of a component replacement Ex of the sewing machine 2 or a repair Rp of the sewing machine 2. The component replacement Ex includes a type of a replaced component and the number of replacements. The repair of the sewing machine 2 includes a part of the repaired sewing machine 2 and the number of repairs.

By operating the input device 5, the administrator can input the component replacement Ex of the sewing machine 2 and the repair Rp of the sewing machine 2 to the history data acquisition unit 16 as the maintenance history of the sewing machine 2.

The history data of the sewing machine 2 acquired by the history data acquisition unit 16 is stored in a history data storage unit 19 of the storage 10.

The calculation unit 17 generates recommendation data for recommending replacement of the sewing machine 2, based on the history data acquired by the history data acquisition unit 16. Based on the history data, the calculation unit 17 determines whether the sewing machine 2 reaches an end of a service life. When it is determined that the sewing machine 2 reaches the end of the service life, the calculation unit 17 generates the recommendation data before the sewing machine 2 reaches the end of the service life.

The calculation unit 17 determines whether each of the plurality of sewing machines 2 (2A, 2B, 2C) reaches an end of a service life. The calculation unit 17 generates recommendation data for each of the plurality of sewing machines 2 (2A, 2B, 2C). The calculation unit 17 individually determines whether each of the plurality of sewing machines 2 reaches the end of the service life, and generates recommendation data for recommending replacement of the sewing machine 2 determined to reach the end of the service life.

In the embodiment, table data indicating a relationship between the plurality of items of the history of the sewing machine 2 and score values assigned to the respective items is stored in a calculation data storage unit 20 of the storage 10. The calculation unit 17 calculates a total value Vr of the score values based on the history data acquired by the history data acquisition unit 16 and the table data stored in the calculation data storage unit 20. The calculation unit 17 generates the recommendation data based on the total value Vr of the score values.

The output unit 18 causes an output device to output the recommendation data for recommending the replacement of the sewing machine 2 generated by the calculation unit 17. In the embodiment, the output device includes the display device 4. Causing the output device to output the recommendation data includes causing the display device 4 to display the recommendation data. The output unit 18 causes the display device 4 to display the recommendation data calculated based on the history data of the sewing machine 2. The output unit 18 causes the display device 4 to individually display the recommendation data of each of the plurality of sewing machines 2 (2A, 2B, 2C). The output unit 18 causes the display device 4 to display the recommendation data for recommending the replacement of the sewing machine 2 determined to reach the end of the service life.

### [Table Data]

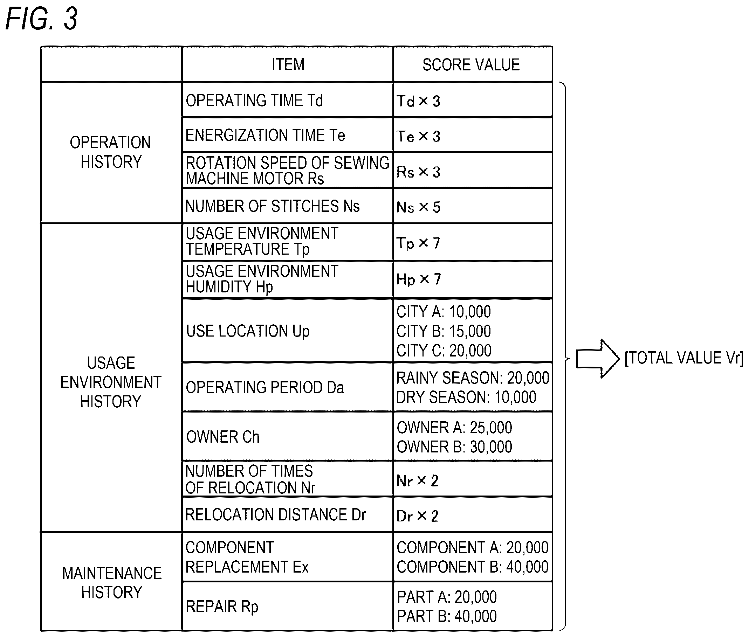

Fig. 3 is a diagram illustrating the table data according to the embodiment. As described above, the table data indicating the relationship between the plurality of items of the history of the sewing machine 2 and the score values assigned to the respective items is stored in advance in the calculation data storage unit 20.

In the embodiment, the items of the history of the sewing machine 2 include the operating time Td of the sewing machine 2, the energization time Te for the electric device of the sewing machine 2, the rotation speed Rs of the sewing machine motor 12, the number of stitches Ns during sewing by the sewing machine 2, the usage environment temperature Tp of the sewing machine 2, the usage environment humidity Hp of the sewing machine 2, the use location Up of the sewing machine 2, the operating period Da of the sewing machine 2, the owner Ch of the sewing machine 2, the number of times of relocation Nr of the sewing machine 2, the relocation distance Dr of the sewing machine 2, the component replacement Ex of the sewing machine 2, and the repair Rp of the sewing machine 2.

The higher a numerical value of the item of the history, the more the deterioration of components of the sewing machine 2 progresses. The components of the sewing machine 2 include mechanical elements and electric elements. The score value is a value obtained by multiplying the numerical value of the item by a predetermined constant. The constant is any value. The higher the total value Vr of the score values, the shorter a period until the sewing machine 2 reaches the end of the service life, and the closer a time to replace the sewing machine 2.

The items of the history of the sewing machine 2 include an item having a large influence on the service life of the sewing machine 2 and an item having a small influence on the service life of the sewing machine 2. The constant by which a numerical value of the item having the large influence on the service life of the sewing machine 2 is multiplied may be larger than the constant by which a numerical value of the item having the small influence on the service life of the sewing machine 2 is multiplied. The constant may be regarded as a weight. A weight assigned to the item having the large influence on the service life of the sewing machine 2 may be larger than a weight assigned to the item having the small influence on the service life of the sewing machine 2.

The operating time Td is an item that affects a service life of each of the components of the sewing machine 2 that are not interlocked with the sewing machine needle. The longer the operating time Td, the more the deterioration of the components of the sewing machine 2 that are not interlocked with the sewing machine needle progresses. In an example shown in Fig. 3, the constant by which the operating time Td is multiplied is "3".

The energization time Te is an item that affects a service life of the electric device of the sewing machine 2. The longer the energization time Te, the more the deterioration of the electric device of the sewing machine 2 progresses. In the example shown in Fig. 3, the constant by which the energization time Te is multiplied is "3".

The rotation speed Rs of the sewing machine motor 12 is an item that affects a service life of each of the sewing machine motor 12 and accessory components of the sewing machine motor 12. The higher the rotation speed Rs, the more the deterioration of the sewing machine motor 12 and the accessory components of the sewing machine motor 12 progresses. In the example shown in Fig. 3, the constant by which the rotation speed Rs is multiplied is "3".

The number of stitches Ns is an item that affects a service life of each of the components of the sewing machine 2 that are interlocked with the sewing machine needle reciprocating in the up-down direction. Examples of the components of the sewing machine 2 that are interlocked with the sewing machine needle include the thread take-up lever and the shuttle. The greater the number of stitches Ns, the more the deterioration of the components of the sewing machine 2 that are interlocked with the sewing machine needle progresses. In the example shown in Fig. 3, the constant by which the number of stitches Ns is multiplied is "5".

The usage environment temperature Tp is an item that affects the service life of the sewing machine 2. The higher the usage environment temperature Tp, the more the deterioration of the sewing machine 2 progresses. In the example shown in Fig. 3, the constant by which the usage environment temperature Tp is multiplied is "7".

The usage environment humidity Hp is an item that affects the service life of the sewing machine 2. The higher the usage environment humidity Hp, the more the deterioration of the sewing machine 2 progresses. In the example shown in Fig. 3, the constant by which the usage environment humidity Hp is multiplied is "7".

The use location Up is an item that affects the service life of the sewing machine 2. A usage environment of the sewing machine 2 changes depending on the use location Up. For example, when the use location Up is a high-temperature and high-humidity location, the deterioration of the sewing machine 2 progresses. When the use location Up is dusty, the deterioration of the sewing machine 2 progresses. A power supply situation may differ depending on the use location Up (country or city), and the progress of the deterioration of the sewing machine 2 may change depending on the power supply situation. The progress of the deterioration of the sewing machine 2 may change depending on the culture, customs, or personality of the use location Up. The score value is determined in advance for each use location Up. In the example shown in Fig. 3, the score value when the use location Up is a city A is "10,000", the score value when the use location Up is a city B is "15,000", and the score value when the use location Up is a city C is "20,000". The city A, the city B, and the city C are examples. The number of cities is any number.

The operating period Da is an item that affects the service life of the sewing machine 2. For example, when the operating period Da is the rainy season, the deterioration of the sewing machine 2 progresses more than when the operating period Da is the dry season. In the example shown in Fig. 3, the score value when the operating period Da is the rainy season is "20,000", and the score value when the operating period Da is the dry season is "10,000". The rainy season and the dry season are examples. The operating period Da may be, for example, spring, summer, autumn, and winter.

The owner Ch is an item that affects the service life of the sewing machine 2. Changing the owner Ch means changing the sewing factory in which the sewing machine 2 is installed. Changing the owner Ch means changing the use location Up of the sewing machine 2. As described above, the progress of the deterioration of the sewing machine 2 may change depending on the use location Up. There is a possibility that the sewing machine 2 is carefully handled in a sewing factory as a certain owner Ch and the sewing machine 2 is roughly handled in a sewing factory as another owner Ch. In the example shown in Fig. 3, the score value when the owner Ch is an owner A is "25,000", and the score value when the owner Ch is an owner B is "30,000". The owner A and the owner B are examples. The number of owners Ch is any number.

The number of times of relocation Nr is an item that affects the service life of the sewing machine 2. The greater the number of times of relocation Nr, the more the deterioration of the sewing machine 2 progresses. In the example shown in Fig. 3, the constant by which the number of times of relocation Nr is multiplied is "2".

The relocation distance Dr is an item that affects the service life of the sewing machine 2. The longer the relocation distance Dr, the more the deterioration of the sewing machine 2 progresses. In the example shown in Fig. 3, the constant by which the relocation distance Dr is multiplied is "2".

The component replacement Ex is an item that affects a replacement time of the sewing machine 2. When a frequency of replacement of a component is high, the maintenance cost increases, and thus it may be advantageous in terms of cost to replace the entire sewing machine 2 rather than replacing the component many times. When an important component needs to be replaced, it may be advantageous in terms of cost to replace the entire sewing machine 2 rather than replacing the important component. In the example shown in Fig. 3, the score value when a component A is replaced is "20,000", and the score value when a component B is replaced is "40,000". The component A and the component B are examples. The components are of any type.

The repair Rp is an item that affects the replacement time of the sewing machine 2. When a frequency of repair of a certain part of the sewing machine 2 is high, the maintenance cost increases, and thus it may be advantageous in terms of cost to replace the entire sewing machine 2 rather than repairing the part many times. When an important part needs to be repaired, it may be advantageous in terms of cost to replace the entire sewing machine 2 rather than repairing the important part. In the example shown in Fig. 3, the score value when a part A is repaired is "20,000", and the score value when a part B is repaired is "40,000". The part A and the part B are examples. The parts of the sewing machine are of any type.

The calculation unit 17 calculates the total value Vr of the score values. In the example shown in Fig. 3, the total value Vr is a total value of the score value related to the operating time Td, the score value related to the energization time Te, the score value related to the rotation speed Rs of the sewing machine motor 12, the score value related to the number of stitches Ns, the score value related to the usage environment temperature Tp, the score value related to the usage environment humidity Hp, the score value related to the use location Up, the score value related to the operating period Da, the score value related to the owner Ch, the score value related to the number of times of relocation Nr, the score value related to the relocation distance Dr, the score value related to the component replacement Ex, and the score value related to the repair Rp.

The calculation unit 17 determines whether a difference ΔVr between the total value Vr and a predetermined threshold Vs is equal to or less than a specified value ΔVs. When it is determined that the difference ΔVr is equal to or less than the specified value ΔVs, the calculation unit 17 generates the recommendation data.

### [Relationship Between Total Value of Score Values and Threshold]

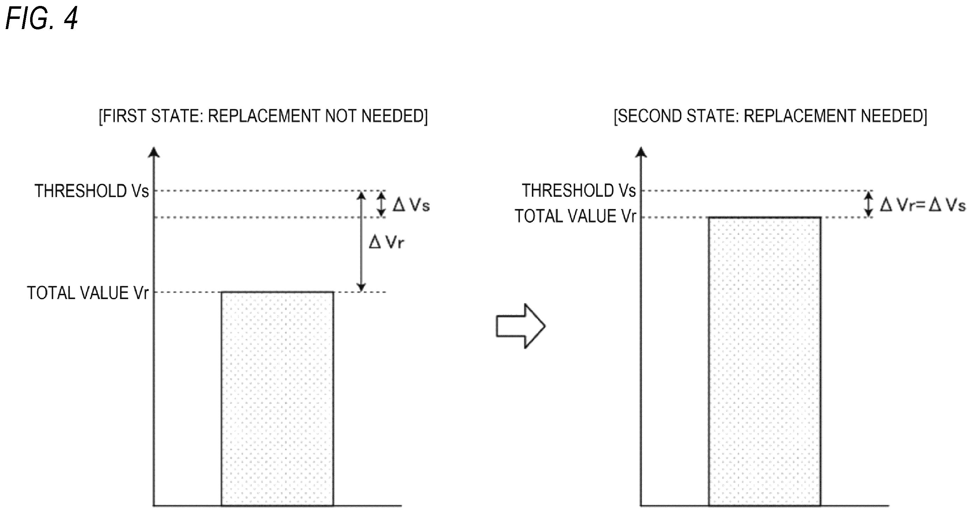

Fig. 4 is a diagram illustrating a relationship between the total value Vr and the threshold Vs according to the embodiment. The higher the total value Vr of the score values, the shorter the period until the sewing machine 2 reaches the end of the service life, and the closer the time to replace the sewing machine 2. The total value Vr reaching the threshold Vs indicates a high possibility that the sewing machine 2 reaches the end of the service life and becomes unusable. The threshold Vs is equal to a total value Vr of the score values when the sewing machine 2 reaches the end of the service life and becomes unusable. The threshold Vs is a value determined in advance based on an actual value (experience value) of the total value Vr of the score values when the sewing machine 2 reaches the end of the service life.

As in a [first state] shown in Fig. 4, when the difference ΔVr between the total value Vr and the threshold Vs is large, that is, when the difference ΔVr exceeds the specified value ΔVs, it means that the period until the sewing machine 2 reaches the end of the service life is long.

As in a [second state] shown in Fig. 4, when the difference ΔVr between the total value Vr and the threshold Vs is small, that is, when the difference ΔVr is equal to or less than the specified value ΔVs, it means that the period until the sewing machine 2 reaches the end of the service life is short.

### [Calculation of Recommended Replacement Time]

In the embodiment, the calculation unit 17 calculates a recommended replacement time of the sewing machine 2. Correlation data indicating a relationship between the history of the sewing machine 2 and an actual value of the service life of the sewing machine 2 is stored in advance in the calculation data storage unit 20. The calculation unit 17 can calculate the recommended replacement time of the sewing machine 2 based on the history data of the sewing machine 2 acquired by the history data acquisition unit 16 and the correlation data stored in the calculation data storage unit 20. A time when the sewing machine 2 reaches the end of the service life or a time immediately before the sewing machine 2 reaches the end of the service life is the recommended replacement time of the sewing machine 2. The calculation unit 17 individually calculates a recommended replacement time of each of the plurality of sewing machines 2. The output unit 18 causes the display device 4 to display the recommended replacement time of the sewing machine 2 calculated by the calculation unit 17. The output unit 18 causes the display device 4 to individually display the recommended replacement time of each of the plurality of sewing machines 2.

For example, when correlation data indicating a relationship between the number of stitches Ns and the actual value of the service life of the sewing machine 2 is derived in advance, the calculation unit 17 can calculate a recommended replacement time of the sewing machine 2 based on the number of stitches Ns acquired by the history data acquisition unit 16 and the correlation data derived in advance. The calculation unit 17 can calculate a service life of the sewing machine 2 by applying the number of stitches Ns acquired by the history data acquisition unit 16 to the correlation data. A time when the sewing machine 2 reaches an end of the service life or a time immediately before the sewing machine 2 reaches the end of the service life is the recommended replacement time of the sewing machine 2. Therefore, the calculation unit 17 can calculate the recommended replacement time of the sewing machine 2.

For example, when correlation data indicating a relationship between the usage environment temperature Tp and the actual value of the service life of the sewing machine 2 is derived in advance, the calculation unit 17 can calculate a recommended replacement time of the sewing machine 2 based on the usage environment temperature Tp acquired by the history data acquisition unit 16 and the correlation data derived in advance. The calculation unit 17 can calculate a service life of the sewing machine 2 by applying the usage environment temperature Tp acquired by the history data acquisition unit 16 to the correlation data. A time when the sewing machine 2 reaches an end of the service life or a time immediately before the sewing machine 2 reaches the end of the service life is the recommended replacement time of the sewing machine 2. Therefore, the calculation unit 17 can calculate the recommended replacement time of the sewing machine 2.

The output unit 18 causes the display device 4 to display the recommended replacement time of the sewing machine 2 calculated by the calculation unit 17.

### [Sewing Machine Management Method]

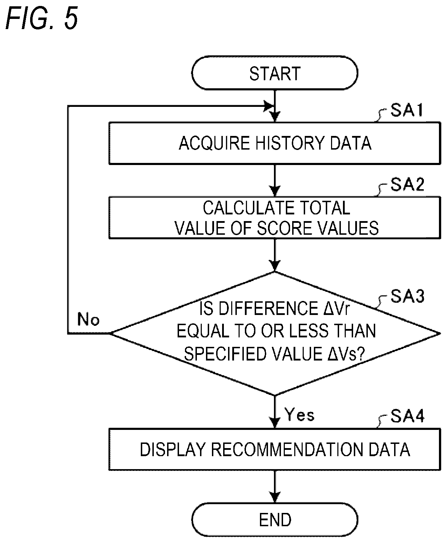

Fig. 5 is a flowchart showing a sewing machine management method according to the embodiment. The history data acquisition unit 16 acquires history data of each of the plurality of sewing machines 2 (2A, 2B, 2C) installed in the sewing factory (step SA1).

The calculation unit 17 calculates a score value for each of the plurality of items of the history based on the history data acquired in step SA1 and the table data described with reference to Fig. 3, and calculates a total value Vr of the score values of the plurality of items (step SA2).

The calculation unit 17 compares the total value Vr of the score values with a threshold Vs related to a predetermined score value. The calculation unit 17 determines whether a difference ΔVr between the total value Vr of the score values and the threshold Vs is equal to or less than a specified value ΔVs (step SA3).

In step SA3, when it is determined that the difference ΔVr is not equal to or less than the specified value ΔVs (step SA3: No), that is, when it is determined that a state is the [first state] shown in Fig. 4, the processing returns to step SA1.

In step SA3, when it is determined that the difference ΔVr is equal to or less than the specified value ΔVs (step SA3: Yes), that is, when it is determined that the state is the [second state] shown in Fig. 4, the output unit 18 causes the display device 4 to display recommendation data for recommending replacement of the sewing machine 2 (step SA4).

When a recommended replacement time of the sewing machine 2 is calculated by the calculation unit 17, the output unit 18 causes the display device 4 to display the recommended replacement time of the sewing machine 2.

### [Advantageous Effects]

As described above, according to the embodiment, the processor 8 of the management device 3 includes the history data acquisition unit 16 that acquires the history data indicating the history of the sewing machine 2, and the output unit 18 that causes the display device 4 to display the recommendation data for recommending the replacement of the sewing machine 2 based on the history data.

According to the embodiment, the recommendation data for recommending the replacement of the sewing machine 2 is displayed on the display device 4 based on the history data of the sewing machine 2. By checking the display device 4, the administrator can replace the sewing machine 2 that reaches the end of the service life with a new sewing machine 2 at an appropriate timing. Since the recommendation data is displayed on the display device 4 immediately before the sewing machine 2 reaches the end of the service life, the administrator can replace the sewing machine 2 at an appropriate timing.

The storage 10 of the management device 3 includes the calculation data storage unit 20 that stores the table data indicating the relationship between the plurality of items of the history of the sewing machine 2 and the score values assigned to the respective items. The processor 8 of the management device 3 includes the calculation unit 17 that calculates the total value Vr of the score values based on the history data of the sewing machine 2 and the table data. Accordingly, the calculation unit 17 can generate appropriate recommendation data by using the plurality of items in the history of the sewing machine 2.

### [Other Embodiments]

In the above embodiment, the calculation unit 17 may calculate a recommended replacement time of the sewing machine 2 based on an artificial intelligence (AI) algorithm. In a case where a trained model in which a history of the sewing machine 2 is set as an input and a service life of the sewing machine 2 is set as an output is stored in advance in the calculation data storage unit 20, the calculation unit 17 can calculate the recommended replacement time of the sewing machine 2 using the trained model stored in the calculation data storage unit 20.

The trained model is trained to identify the service life of the sewing machine 2 based on the history of the sewing machine 2. In the embodiment, the trained model is generated by deep learning. During a learning stage of deep learning, a plurality of items of the history of the sewing machine 2 are input to a learning device. The learning device learns features included in the history of the sewing machine 2. The learning device learns a plurality of histories of the sewing machine 2 and extracts features included in the histories of the sewing machine 2. Based on the features of the history of the sewing machine 2, the learning device generates the trained model in which the history of the sewing machine 2 is set as the input and the service life of the sewing machine 2 is set as the output. The trained model generated by the learning device is stored in the calculation data storage unit 20.

The calculation data storage unit 20 stores the trained model that is trained to identify the service life of the sewing machine 2 based on the history of the sewing machine 2. The calculation unit 17 uses the trained model stored in the calculation data storage unit 20 to calculate a time when the sewing machine 2 reaches an end of the service life. The history data acquisition unit 16 acquires history data of the sewing machine 2. The calculation unit 17 inputs the history data of the sewing machine 2 to the trained model and calculates the time when the sewing machine 2 reaches the end of the service life. The time when the sewing machine 2 reaches the end of the service life or a time immediately before the sewing machine 2 reaches the end of the service life is the recommended replacement time of the sewing machine 2. Therefore, the calculation unit 17 can calculate the recommended replacement time of the sewing machine 2.

## Claims

1. A sewing machine management system comprising:
a history data acquisition unit configured to acquire history data indicating a history of a sewing machine; and
an output unit configured to cause an output device to output, based on the history data, recommendation data for recommending replacement of the sewing machine.

2. The sewing machine management system according to claim 1, further comprising:
a calculation data storage unit configured to store table data indicating a relationship between a plurality of items of the history and score values assigned to the respective items; and
a calculation unit configured to calculate a total value of the score values based on the history data and the table data, wherein
the output unit is configured to cause the output device to output the recommendation data based on the total value.

3. The sewing machine management system according to claim 2, wherein
the calculation unit is configured to determine whether a difference between the total value and a predetermined threshold is equal to or less than a specified value, and
when it is determined that the difference is equal to or less than the specified value, the output unit causes the output device to output the recommendation data.

4. The sewing machine management system according to claim 3, wherein
the threshold is equal to the total value when the sewing machine reaches an end of a service life.

5. The sewing machine management system according to claim 1, further comprising:
a calculation data storage unit configured to store correlation data indicating a relationship between the history of the sewing machine and an actual value of a service life of the sewing machine; and
a calculation unit configured to calculate a recommended replacement time of the sewing machine based on the history data and the correlation data, wherein
the output unit is configured to cause the output device to output the recommended replacement time.

6. The sewing machine management system according to claim 1, wherein
the history includes an operation history of the sewing machine, and
the operation history includes at least one of an operating time of the sewing machine, an energization time for an electric device of the sewing machine, a rotation speed of a sewing machine motor, or the number of stitches during sewing by the sewing machine.

7. The sewing machine management system according to claim 1, wherein
the history includes a usage environment history of the sewing machine, and
the usage environment history includes at least one of a usage environment temperature of the sewing machine, a usage environment humidity of the sewing machine, a country or a city where the sewing machine is used, an operation year and month of the sewing machine, an owner of the sewing machine, the number of times of relocation of the sewing machine, or a relocation distance of the sewing machine.

8. The sewing machine management system according to claim 1, wherein
the history includes a maintenance history of the sewing machine, and
an item of the maintenance history includes at least one of component replacement of the sewing machine or repair of the sewing machine.

9. A sewing machine management method comprising:
acquiring history data indicating a history of a sewing machine; and
causing an output device to output, based on the history data, recommendation data for recommending replacement of the sewing machine.
